# EUROPÄISCHE PATENTSCHRIFT

(11) **EP 2 979 981 B1**
(45) Veröffentlichungstag und Bekanntmachung des Hinweises auf die Patenterteilung: **25.01.2017**
(21) Anmeldenummer: 14002686.5
(22) Anmeldetag: 01.08.2014
(51) Int. Cl.: B64D 45/02

(54) **Blitzschutzschicht für Faserverbund-Strukturen**
Lightning protection layer for fibre composite structures
Couche de protection anti-foudre pour des structures composites en fibres

(43) Veröffentlichungstag der Anmeldung: 03.02.2016
(73) Patentinhaber: Airbus Defence and Space GmbH, 85521 Ottobrunn (DE)
(72) Erfinder: Karch, Christian, 85579 Neubiberg (DE); Steinwandel, Jürgen, 88690 Uhldingen-Mühlhofen (DE)
(74) Vertreter: Kopf Westenberger Wachenhausen Patentanwälte PartG mbB

(56) Entgegenhaltungen:
- EP-A1- 2 682 262
- EP-A2- 2 511 174
- DE-A1-102006 046 002
- US-A1- 2008 248 275

## Beschreibung

### Gebiet der Erfindung

Die Erfindung betrifft den Blitzschutz von Fahrzeugen, insbesondere den Blitzschutz von Luft- und Raumfahrzeugen. Die Erfindung betrifft eine Blitzschutzschicht für ein Luft- und Raumfahrzeug und ein Luft- bzw. Raumfahrzeug mit einer solchen Blitzschutzschicht.

### Hintergrund der Erfindung

Der Einsatz größerer Strukturen wie z.B. Teilen eines Fahrzeugkörpers oder eines Luftfahrzeugrumpfes in Faserverbundbauweise (z.B. Karbonfaser-Kunststoff, CFK, Bauweise oder Glasfaser-Kunststoff, GFK, Bauweise) kann einen Schutz dieser Strukturen gegenüber den Folgen eines Blitzschlags erfordern. Der Vorgang des Blitzeinschlags ist bei Faserverbund-Bauteilen im Wesentlichen analog zum Vorgang bei metallischen oder elektrisch und thermisch leitfähigen Strukturen. Es kommt zur Ausbildung eines Vorentladungs-Plasmakanals und im weiteren Verlauf zur Blitzentladung. Je nach Lage des Erstberührungspunktes, d.h. des Punktes an der Oberfläche der Struktur, welcher als erstes von dem Blitz kontaktiert wird, wird der Blitzkanal nach einer ersten Stoßstromentladung anschließend über die Oberfläche der Struktur gezogen. Mit der Berührung von Blitzkanal und Strukturoberfläche ist ein hoher Stromfluss und Wärmeeintrag in die betreffende Struktur verbunden. Die Parameter, die die Intensität der Blitzentladung charakterisieren, unterscheiden sich zwischen Faserverbundstrukturen und metallischen Bauteilen nicht oder im Wesentlichen nicht. Üblicherweise sind die thermische Leitfähigkeit und die elektrische Leitfähigkeit von Faserverbund-Bauteilen geringer oder deutlich geringer als diejenige von metallischen Strukturen. Daher kann für Faserverbund-Strukturen ein Blitzschutz erforderlich sein.

Bei lackierten Faserverbund-Strukturen werden die direkten Blitzschäden im Wesentlichen durch eine von dem Blitzschlag verursachte Explosion des Blitzschutzes verursacht. Ein Blitzschutz kann aus expandierter Kupferfolie, die in ein Epoxidharz einlaminiert ist, bestehen. Die Explosion des Blitzschutzes wird durch die direkte Wärme des Plasmakanals und durch die Joulesche Wärme die durch den Blitzstrom in der expandierten Kupferfolie generiert wird, verursacht.

Zum Schutz von Faserverbund-Strukturen gegen Schädigungen, insbesondere thermo-mechanische Schädigungen, bei einem Blitzeinschlag werden üblicherweise expandierte Metallfolien, insbesondere Kupferfolien, eingesetzt. Diese expandierten Kupferfolien werden als äußere Lage auf eine äußere Oberfläche der Faserverbund-Struktur angebracht und in das Faserverbund-Bauteil einlaminiert. Expandierte Metallfolien sind wegen der Anpassung an eine Oberflächenform beispielsweise bei zweifach gekrümmten Strukturen vorteilhaft. Zum Schutz gegen Umwelteinflüsse wird diese Faserverbund-Struktur anschließend mit einem elektrisch nicht leitfähigen dielektrischen Lack geschützt. Bedingt durch die physikalischen Eigenschaften solcher konventionellen, dielektrischen Lacke kann bei einem Blitzeinschlag auf die Oberfläche der Faserverbund-Struktur eine Konzentration bzw. Einschnürung eines bei dem Blitzeinschlag entstehenden Plasmakanals am Fußpunkt bzw. Einschlagspunkt stattfinden. Weiterhin kann ein solcher Lack ein gleichförmiges Gleiten des Fußpunktes des Blitzkanals über die Oberfläche der Faserverbund-Struktur behindern oder verhindern. Auch kann es durch eine direkte Wärme des Plasmakanals und der Jouleschen Wärme des Blitzstroms zu einer Explosion der Blitzschutzschicht, welche sich unterhalb des Lacks befindet, kommen.

US 2008/0248275 A1 beschreibt alternativ zu einem Blitzschutz mit expandierter Metallfolie eine Blitzschutzschicht, welche aus einzelnen, übereinander liegenden Graphen-Schichten besteht.

EP 2 682 262 A1 beschreibt eine Verbundwerkstoffschicht zum Schutz von Luftfahrzeugen vor äußeren Einflüssen. Die Verbundwerkstoffschicht weist eine erste Lage mit Kohlenstoffnanoröhrchen auf. Eine zweite Lage ist als Metallfolie oder Metallgitter ausgeführt und kann unterhalb der ersten Lage angeordnet sein, d.h. dass die erste Lage in Richtung der Luftfahrzeugumgebung angeordnet ist.

EP 2 511 174 A2 beschreibt eine Beschichtung für ein Luftfahrzeug, welche für den Schutz des Luftfahrzeugs vor äußeren Einflüssen, wie z.B. Blitzschlag, ausgeführt ist. Die Beschichtung weist eine erste Lage mit Kohlenstoff und eine expandierte Kupferfolie als zweite Lage auf, wobei die Kupferfolie oberhalb der ersten Lage angeordnet ist, also in Richtung der Umgebung eines Luftfahrzeugs.

DE 10 2006 046 002 A1 beschreibt ein Schichtsystem zum Blitzschutz von Luftfahrzeugen. Eine äußere Lackschicht weist Kohlenstoff auf und eine darunter liegende Schicht ist als Metallschicht oder Metallfolie ausgebildet.

### Zusammenfassung der Erfindung

Es kann als Aufgabe der Erfindung betrachtet werden, den Blitzschutz von Faserverbund-Strukturen zu verbessern.

Diese Aufgabe wird gelöst durch den Gegenstand der unabhängigen Ansprüche. Weiterbildungen der Erfindung ergeben sich aus den abhängen Ansprüchen und aus der folgenden Beschreibung.

Insbesondere ermöglicht der Gegenstand der unabhängigen Ansprüche, den Umfang einer Beschädigung, z.B. einer thermo-mechanischen Beschädigung, einer Faserverbund-Struktur durch einen Blitzschlag zu reduzieren oder sogar vollständig zu vermeiden.

Gemäß einem Aspekt der Erfindung ist eine Blitzschutzschicht für ein Luft- oder Raumfahrzeug angegeben. Die Blitzschutzschicht weist eine erste Lage und eine zweite Lage auf. Die zweite Lage ist mit der ersten Lage entlang einer Verbindungsfläche gekoppelt. Die erste Lage weist eine Metallfolie auf. Die zweite Lage weist zumindest eine zweidimensionale flächige Graphen-Schicht auf. Die Blitzschutzschicht weist weiter eine dritte Lage auf, welche so angeordnet ist, dass die erste Lage zwischen der zweiten Lage und der dritten Lage angeordnet ist. Die dritte Lage weist zumindest eine zweidimensionale flächige Graphen-Schicht auf. Die zweite Lage ist insbesondere so angeordnet, dass sie näher an einer Oberfläche des Luftfahrzeugs ist als die erste Lage. In anderen Worten bedeckt die zweite Lage die erste Lage.

Die zweite Lage kann mehrere Graphen-Schichten aufweisen. Die Graphen-Schichten reduzieren den Betrag der generierten Jouleschen Wärme und führen auf Grund ihrer relativ hohen thermischen Leitfähigkeit die Wärme schneller vom Blitzeinschlagspunkt ab. Dies führt dazu, dass für die oberflächennahe Explosion des Gemisches, das beispielsweise aus expandierter Metallfolie und Epoxidharz besteht, weniger Energie zur Verfügung steht. Daher werden die thermo-mechanischen oder mechanischen Schäden der Faserverbund-Struktur, die einem Hochgeschwindigkeitseinschlag ähneln, reduziert, weil die durch die Explosion erzeugte Stoßwelle in der Faserverbund-Struktur eine geringere Amplitude aufweist.

Die beschriebenen Effekte erlauben es, auf Grund des Vorhandenseins der Kohlenstoffallotrope in der zweiten Lage die metallische Beschichtung bzw. die Metallfolie der ersten Lage, die den Strom und die Wärme flächig verteilen muss, dünner zu gestalten. Dadurch wird zunächst ein Teil des Gewichtes reduziert, welches allein für den Blitzschutz erforderlich ist. Die thermischen und mechanischen Schäden an einer Faserverbund-Struktur werden reduziert und der Reparaturaufwand einer Faserverbund-Struktur nach einem Blitzschlag kann deutlich reduziert werden.

Die Verbindungsfläche zwischen der ersten Lage und der zweiten Lage ist eine erste Oberfläche der ersten Lage. Dies bedeutet, dass die zweite Lage mit der ersten Lage verbunden ist, beispielsweise durch eine stoffschlüssige Verbindung mit oder ohne Materialzusatz oder durch eine Klebeverbindung, und unmittelbar an der ersten Lage anliegt. In einer Ausführungsform kann die zweite Lage durch ein Fügeverfahren auf die erste Lage aufgebracht werden, so dass eine dauerhafte Verbindung zwischen der ersten Lage und der zweiten Lage entlang der Verbindungsfläche entsteht.

Die erste Lage und die zweite Lage sind in Längsrichtung der Blitzschutzschicht parallel zueinander angeordnet und grenzen aneinander an. In Richtung der Tiefe der Blitzschutzschicht sind diese beiden Lagen übereinander angeordnet.

Die Metallfolie ist ein flächiges, elektrisch und thermisch leitfähiges Element, wie beispielsweise eine Kupferfolie. Die Metallfolie kann eine ausnehmungsfreie Metallfolie sein oder eine Mehrzahl von Ausnehmungen oder Durchbrüchen aufweisen. Die zweite Lage ist zumindest teilweise aus Kohlenstoffallotropen aufgebaut bzw. weist Kohlenstoffallotrope auf.

Gemäß einer Ausführungsform der Erfindung ist die Metallfolie eine expandierte Kupferfolie.

Die expandierte Kupferfolie ist eine einstückige, netzförmige, flächige Struktur und weist eine Mehrzahl von Ausnehmungen auf. Eine solche expandierte Kupferfolie weist beispielsweise eine Dicke von wenigen zehn µm bis hin zu wenigen hundert µm sowie üblicherweise ein Flächengewicht zwischen 70 und 200 g/m² auf. Durch diesen Aufbau ist eine expandierte Kupferfolie insbesondere anpassbar an mehrfach gekrümmte Oberflächen, z.B. an eine Außenstruktur eines Luftfahrzeugs.

Gemäß der Erfindung ist die zweite Lage als zumindest eine zweidimensionale flächige Graphen-Schicht ausgeführt. Graphene sind zweidimensionale, flächige Elemente bestehend aus Kohlenstoff und weisen eine Dicke von beispielsweise einer Atomlage im Idealfall oder wenigen Nanometern bis zu zehn nm auf. Graphene zeichnen sich durch eine hohe Temperaturbeständigkeit und eine gute elektrische und thermische Leitfähigkeit aus, die in der Regel größer ist als die elektrische und thermische Leitfähigkeit von Metallen, wie z.B. Kupfer.

Gemäß einer weiteren Ausführungsform der Erfindung weist die zweite Lage mehr als zehn Graphen-Schichten auf.

Die Graphen-Schichten sind dabei übereinander angeordnet bzw. übereinander gestapelt, so dass die Gesamtdicke der zweiten Lage und damit die thermische Beständigkeit und die elektrische und thermische Leitfähigkeit weiter erhöht wird. In einer Blickrichtung von dem Luftfahrzeugäußeren zum Luftfahrzeuginneren sind die Graphen-Schichten der zweiten Lage hintereinander angeordnet und die erste Lage befindet sich hinter der zweiten Lage.

Gemäß der Erfindung weist die Blitzschutzschicht weiterhin eine dritte Lage auf. Die dritte Lage ist so angeordnet, dass die erste Lage zwischen der zweiten Lage und der dritten Lage angeordnet ist.

In anderen Worten befindet sich die dritte Lage hinter der ersten Lage. Insbesondere ist die erste Lage unmittelbar zwischen der zweiten Lage und der dritten Lage angeordnet, d.h. die erste Lage grenzt unmittelbar an die zweite Lage auf der einen Seite und an die dritte Lage auf der anderen Seite an. Die zweite Lage grenzt an eine erste Oberfläche der ersten Lage und die dritte Lage grenzt an eine zweite Oberfläche der ersten Lage an. Die erste und zweite Oberfläche der ersten Lage sind einander gegenüberliegend angeordnet.

Gemäß der Erfindung ist die dritte Lage als zumindest eine zweidimensionale flächige Graphen-Schicht ausgeführt.

Gemäß einer weiteren Ausführungsform der Erfindung weist die dritte Lage mehr als zehn Graphen-Schichten auf.

Die dritte Lage ist damit vergleichbar zu der zweiten Lage aufgebaut. In einer Ausführungsform sind die dritte Lage und die zweite Lage identisch aufgebaut. In einer weiteren Ausführungsform ist die dritte Lage symmetrisch zu der zweiten Lage mit Bezug zu der ersten Lage aufgebaut.

Gemäß einer weiteren Ausführungsform der Erfindung weist die Blitzschutzschicht eine vierte Lage auf. Die vierte Lage ist so angeordnet, dass die zweite Lage zwischen der ersten Lage und der vierten Lage angeordnet ist. Die vierte Lage ist mit elektrisch leitfähigen Elementen versetzt.

Die elektrisch leitfähigen Elemente der vierten Lage reduzieren die dielektrische Festigkeit der Oberfläche der Blitzschutzschicht, d.h. die erforderliche Energie der Ladungsträger zum Durchbrechen dieser Schichten bzw. Lagen ist geringer. Der Blitzkanal kann sich deshalb leichter über die Oberfläche der Blitzschutzschicht bewegen als bei einer dielektrischen Lackschicht mit hoher dielektrischer Festigkeit. Die Verweildauer des Blitzkanals an einem festen Punkt der Oberfläche der Blitzschutzschicht bzw. der Faserverbund-Struktur wird auf diese Weise vermindert. Die eingebrachten elektrisch leitfähigen Elemente bewirken eine großflächige Bildung von sog. Streamern, die sich mit dem sich nähernden Leitblitz verbinden können. Dadurch wird der Blitzkanal im Bereich seines Fußpunktes nicht wie bei einem konventionellen Lack eingeschnürt, sondern aufgeweitet. Diese Aufweitung bewirkt ihrerseits eine Verteilung des Stromflusses und des Wärmeeintrags auf eine größere Fläche mit dem Resultat einer reduzierten thermischen Belastung der Faserverbundstruktur im Bereich des Fußpunktes. In anderen Worten wird die durch den Blitzschlag eingebrachte Leistung pro Flächeneinheit reduziert und damit auch der durch den Blitzschlag verursachte thermo-mechanische Schaden an der Faserverbund-Struktur.

Gemäß einer weiteren Ausführungsform der Erfindung handelt es sich bei diesen elektrisch leitfähigen Elementen beispielsweise um Kohlenstoffallotrope. Insbesondere handelt es sich bei den elektrisch leitfähigen Elementen um Kohlenstoffnanoröhren (carbon nano tubes, CNT).

Gemäß einer weiteren Ausführungsform der Erfindung ist die vierte Lage eine Lackschicht, welche mit den elektrisch leitfähigen Elementen versetzt ist.

Die Lackschicht stellt damit einen Oberflächenschutz bzw. eine Oberfläche der Blitzschutzschicht bzw. des Luftfahrzeugs dar und schützt sowohl die Blitzschutzschicht als auch das Luftfahrzeug vor Umwelteinflüssen.

Gemäß einer weiteren Ausführungsform der Erfindung ist die vierte Lage so mit elektrisch leitfähigen Elementen versetzt, dass die Perkolationsgrenze der vierten Lage unterschritten oder gerade erreicht, jedenfalls aber nicht überschritten ist.

Der Lackschicht bzw. der vierten Lage werden so wenige elektrisch leitfähige Elemente, beispielsweise Kohlenstoffallotrope oder CNTs, zugesetzt, dass die vierte Lage in einem Grundzustand elektrisch nicht leitfähig ist. Damit werden die mechanischen, elektrischen und thermischen Eigenschaften der vierten Lage nicht oder im Wesentlichen nicht verändert, so dass die grundsätzlichen Anforderungen an eine Oberflächenschicht oder Lackschicht eines Luftfahrzeugs durch das Zusetzen von elektrisch leitfähigen Elementen nicht oder kaum beeinflusst werden. Bei einem Blitzeinschlag ermöglichen jedoch die elektrisch leitfähigen Elemente, beispielsweise in Form von Kohlenstoffallotropen, dass ein sich bildender Plasmakanal sich entlang der vierten Lage bewegen kann, also über eine Oberfläche des Luftfahrzeugs, um die Belastungen durch den Blitzeinschlag nicht auf eine Stelle zu bündeln und so die potentiell entstehenden Schäden zu reduzieren.

In anderen Worten zeichnet sich die Blitzschutzschicht wie oben und im Folgenden beschrieben wie folgt aus: es wird eine hybride Blitzschutzschicht für Faserverbund-Strukturen beschrieben. Die Blitzschutzschicht besteht aus zumindest zwei Lagen. Eine erste Lage weist eine expandierte Metallfolie auf, welche elektrisch und thermisch leitfähig ist. Die expandierte Metallfolie weist beispielsweise eine Dicke zwischen 10 µm und 250 µm auf, bevorzugt zwischen 40µm und 120µm und hat üblicherweise ein Flächengewicht zwischen beispielsweise 70 g/m² und 200 g/m². Eine zweite Lage, welche sich entlang der ersten Lage erstreckt, weist mindestens eine Graphen-Schicht, also ein zweidimensionales flächiges Gebilde aus Kohlenstoff, auf. Eine weitere Lage (vierte Lage) besteht aus einem Lack, beispielsweise auf Polyurethan-Basis, welcher mit elektrisch leitfähigen Elementen, beispielsweise mit CNT, versetzt ist und über der zweiten Lage angeordnet ist. Unter der ersten Lage kann eine weitere Lage (dritte Lage) mit mindestens einer Graphen-Schicht angeordnet sein, so dass die erste Lage mit der expandierten Metallfolie zwischen der zweiten Lage und der dritten Lage angeordnet ist und mit diesen unmittelbar gekoppelt ist. Die Richtungsangaben unten bzw. oben mit Bezug zu der Blitzschutzschicht sind so zu verstehen, dass "oben" in Richtung eines Fahrzeugäußeren gerichtet und "unten" in Richtung des Fahrzeuginneren gerichtet ist.

Die Kombination von Lagen mit expandierter Metallfolie und Graphen-Schichten zumindest entlang einer Oberfläche der expandierten Metallfolie kann insbesondere dazu beitragen, thermo-mechanische Schädigungen einer Faserverbund-Struktur bei einem Blitzschlag und durch einen Blitzschlag zu reduzieren bzw. zu vermeiden.

Ein Vorteil dieser hybriden Blitzschutzschicht besteht darin, dass die Dicke der expandierten Metallfolie und somit das Flächengewicht der hybriden Blitzschutzschicht reduziert werden kann. Ebenso kann ein thermo-mechanischer oder mechanischer Schaden der Faserverbund-Struktur reduziert werden, weil die eingesetzten Graphen-Schichten größere elektrische und thermische Leitfähigkeit aufweisen als die Faserverbund-Struktur. Ebenso trägt die hohe Temperaturbeständigkeit von Graphen-Schichten mit einem Schmelzpunkt bei über 4000° C (im Vergleich dazu ca. 1100° C bei Kupfer) dazu bei, einen Schaden durch einen Blitzschlag an der Faserverbund-Struktur zu reduzieren. Der Aufbau der Blitzschutzschicht trägt dazu bei, dass eine Amplitude der durch den Blitzschlag generierten Jouleschen Wärme reduziert wird. Weiterhin können die Graphen-Schichten auf Grund ihrer höheren thermischen Leitfähigkeit die generierte Wärme besser und schneller vom Blitzschlagpunkt abführen als die Faserverbund-Struktur und die metallische Folie. Diese Effekte können in Summe dazu führen, dass für die Explosion bzw. Beschädigung der Blitzschutzschicht weniger Energie zur Verfügung steht. Weiterhin besitzt die durch diese Explosion verursachte Stoßwelle weniger Energie, so dass eine möglicherweise hierdurch verursachte mechanische Beschädigung der Faserverbund-Struktur verringert werden kann.

Gemäß einem weiteren Aspekt der Erfindung ist ein Luftfahrzeug mit einer Blitzschutzschicht wie oben und im Folgenden beschrieben angegeben. Die Blitzschutzschicht erstreckt sich entlang zumindest eines Teils oder eines Abschnitts einer äußeren Oberfläche des Luftfahrzeugs.

Beispielsweise kann die Blitzschutzschicht sich entlang einer Tragfläche oder entlang eines Rumpfs des Luftfahrzeugs erstrecken.

Gemäß einer Ausführungsform der Erfindung ist die Blitzschutzschicht so angeordnet, dass die erste Lage zwischen der zweiten Lage und einem Innenraum des Luftfahrzeugs angeordnet ist.

Gemäß einer weiteren Ausführungsform der Erfindung erstreckt sich die Blitzschutzschicht sich entlang der gesamten äußeren Oberfläche des Luftfahrzeugs.

### Kurze Beschreibung der Figuren

Nachfolgend wird anhand der beigefügten Zeichnungen näher auf Ausführungsbeispiele der Erfindung eingegangen. Es zeigen:
- **Fig. 1**: eine schematische Darstellung des Aufbaus einer Blitzschutzschicht gemäß einem Ausführungsbeispiel der Erfindung;
- **Fig. 2**: eine schematische Darstellung eines Luftfahrzeugs mit einer Blitzschutzschicht gemäß einem weiteren Ausführungsbeispiel der Erfindung.

Die Darstellungen in den Figuren sind schematisch und nicht maßstabsgetreu. Werden gleiche Bezugszeichen verwendet, so beziehen sich diese auf ähnliche oder gleiche Elemente.

### Detaillierte Beschreibung von Ausführungsbeispielen

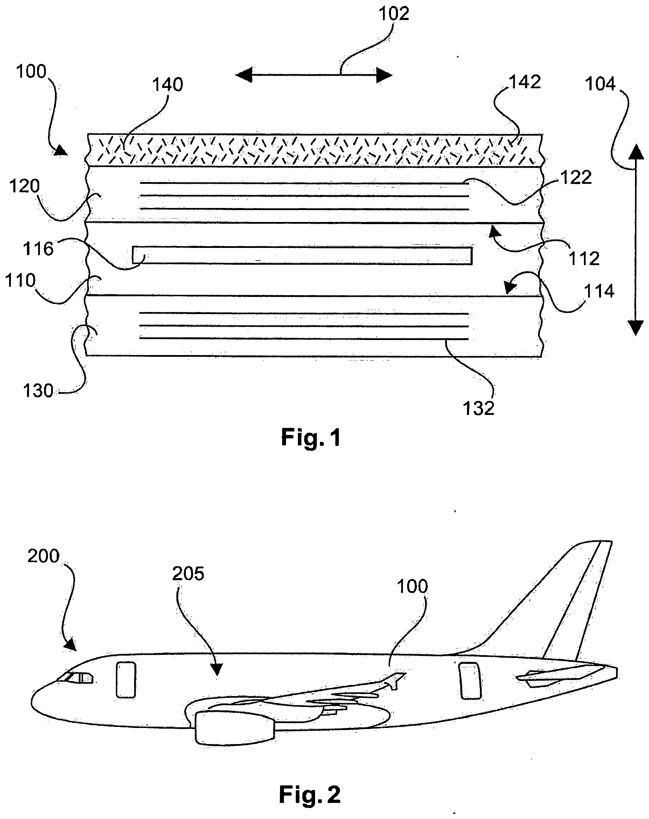

Fig. 1 zeigt eine Querschnittdarstellung einer Blitzschutzschicht 100. Die Blitzschutzschicht 100 weist eine erste Lage 110, eine zweite Lage 120, eine dritte Lage 130 und eine vierte Lage 140 auf.

Die Blitzschutzschicht 100 kann beispielsweise als Außenverkleidung eines Fahrzeugs, insbesondere eines Luftfahrzeugs, dienen. Dabei sind die Lagen 110, 120, 130 und 140 so angeordnet, dass die dritte Lage 130 einem Innenraum des Fahrzeugs zugewandt ist, danach in Richtung der Umgebung des Fahrzeugs die erste Lage 110, die zweite Lage 120 und dann die vierte Lage 140 folgt. Diese Reihenfolge der Schichten von innen nach außen entspricht einer Richtung von unten nach oben in Fig. 1 entlang des Pfeils 104.

Die erste Lage 110 weist eine Metallfolie 116 auf, welche sich in einer Längsrichtung 102 und in einer Querrichtung (nicht gezeigt, aus der Zeichenebene der Fig. 1 heraus bzw. in diese hinein) flächig erstreckt.

Die erste Lage 110 weist eine erste Oberfläche 112 und eine zweite Oberfläche 114 auf, welche sich jeweils parallel zu der Metallfolie 116 erstrecken. Die erste Oberfläche und die zweite Oberfläche sind einander gegenüberliegend angeordnet.

Die zweite Lage 120 ist mit der ersten Oberfläche 112 der ersten Lage 110 gekoppelt und weist eine Mehrzahl von übereinander liegenden Graphen-Schichten 122 auf. Die Graphen-Schichten sind jeweils übereinander angeordnet und verlaufen jeweils entlang einer Erstreckungsrichtung der ersten Lage 110.

Die dritte Lage 130 weist einen Aufbau vergleichbar mit der zweiten Lage 120 auf. Ebenso wie die zweite Lage 120 weist die dritte Lage 130 eine Mehrzahl von übereinander liegenden Graphen-Schichten 132 auf.

Die vierte Lage 140 ist mit elektrisch leitenden Elementen 142 versehen. Die elektrisch leitenden Elemente sind beispielsweise Kohlenstoffnanoröhren (CNT), welche sich in einer Lackschicht befinden bzw. in einen Lack der vierten Schicht eingemischt sind.

Die vierte Lage 140 ist insbesondere eine Lackschicht, welche die Blitzschutzschicht 100 und das Luftfahrzeug vor Umwelteinflüssen schützt.

Fig. 2 zeigt ein Luftfahrzeug 200, auf dessen Außenfläche 205 eine Blitzschutzschicht 100 angeordnet ist.

### Liste der Bezugszeichen

- 100: Blitzschutzschicht
- 102: Längsrichtung
- 104: Tiefenrichtung
- 110: erste Lage
- 112: erste Oberfläche
- 114: zweite Oberfläche
- 116: Metallfolie
- 120: zweite Lage
- 122: Graphen-Schicht
- 130: dritte Lage
- 132: Graphen-Schicht
- 140: vierte Lage
- 142: Kohlenstoffnanoröhren
- 200: Luftfahrzeug
- 205: Außenfläche

## Patentansprüche

1. Blitzschutzschicht (100) für ein Luftfahrzeug (200), aufweisend:
eine erste Lage (110);
eine zweite Lage (120), welche mit der ersten Lage (110) entlang einer Verbindungsfläche (112) gekoppelt ist:
eine dritte Lage (130), welche so angeordnet ist, dass die erste Lage (110) zwischen der zweiten Lage (120) und der dritten Lage (130) angeordnet ist;
wobei die erste Lage (110) eine Metallfolie (116) aufweist;
wobei die zweite Lage (120) zumindest eine zweidimensionale flächige Graphen-Schicht aufweist;
wobei die dritte Lage (130) zumindest eine zweidimensionale flächige Graphen-Schicht aufweist.

2. Blitzschutzschicht (100) nach Anspruch 1,
wobei die Metallfolie (116) eine expandierte Kupferfolie ist.

3. Blitzschutzschicht (100) nach Anspruch 1 oder 2,
wobei die zweite Lage (120) mehr als zehn Graphen-Schichten aufweist.

4. Blitzschutzschicht (100) nach einem der vorhergehenden Ansprüche,
wobei die dritte Lage (130) mehr als zehn Graphen-Schichten aufweist.

5. Blitzschutzschicht (100) nach einem der vorhergehenden Ansprüche,
weiterhin aufweisend eine vierte Lage (140), welche so angeordnet ist, dass die zweite Lage (120) zwischen der ersten Lage (110) und der vierten Lage (140) angeordnet ist;
wobei die vierte Lage (140) mit elektrisch leitfähigen Elementen versetzt ist.

6. Blitzschutzschicht (100) nach Anspruch 5,
wobei die elektrisch leitfähigen Elemente der vierten Lage (140) Kohlenstoffnanoröhren sind.

7. Blitzschutzschicht (100) nach Anspruch 5 oder 6,
wobei die vierte Lage (140) eine Lackschicht ist, welche mit den elektrisch leitfähigen Elementen (142) versetzt ist.

8. Blitzschutzschicht (100) nach einem der Ansprüche 5 bis 7,
wobei die vierte Lage (140) so mit elektrisch leitfähigen Elementen (142) versetzt ist, dass die Perkolationsgrenze der vierten Lage unterschritten ist.

9. Luftfahrzeug (200) mit einer Blitzschutzschicht (100) nach einem der Ansprüche 1 bis 8;
wobei die Blitzschutzschicht (100) sich zumindest entlang eines Teils einer äußeren Oberfläche (205) des Luftfahrzeugs erstreckt.

10. Luftfahrzeug (200) nach Anspruch 9,
wobei die Blitzschutzschicht (100) so angeordnet ist, dass die erste Lage zwischen der zweiten Lage (120) und einem Innenraum des Luftfahrzeugs angeordnet ist.

11. Luftfahrzeug (200) nach einem der Ansprüche 9 oder 10,
wobei die Blitzschutzschicht (200) sich entlang der gesamten äußeren Oberfläche des Luftfahrzeugs erstreckt.

## Claims

1. A lightning protection layer (100) for an aircraft (200), comprising:
a first stratum (110);
a second stratum (120), which is coupled with the first stratum (110) along a connecting surface (112);
a third stratum (130) which is disposed such that the first stratum (110) is arranged between the second stratum (120) and the third stratum (130);
wherein the first stratum (110) comprises a metal foil (116);
wherein the second stratum (120) comprises at least one two-dimensional flat graphene layer;
wherein the third stratum (130) comprises at least one two-dimensional flat graphene layer.

2. The lightning protection layer (100) according to claim 1,
wherein the metal foil (116) is an expanded copper foil.

3. The lightning protection layer (100) according to one of claims 1 or 2,
wherein the second stratum (120) comprises more than ten graphene layers.

4. The lightning protection layer (100) according to claim 6,
wherein the third stratum (130) comprises more than ten graphene layers.

5. The lightning protection layer (100) according to any one of the preceding claims,
further comprising a fourth stratum (140) which is disposed such that the second stratum (120) is disposed between the first stratum (110) and the fourth stratum (140);
wherein the fourth stratum (140) is provided with electrically conductive elements.

6. The lightning protection layer (100) according to claim 5,
wherein the electrically conductive elements of the fourth stratum (140) are carbon nanotubes.

7. The lightning protection layer (100) according to any one of claims 5 or 6,
wherein the fourth stratum (140) is a coating layer, which is admixed with electrically conductive elements (142).

8. The lightning protection layer (100) according to any one of claims 5 to 7,
wherein the fourth stratum (140) is admixed with electrically conductive elements (142) such that the percolation threshold of the fourth stratum is undercut and not met.

9. An aircraft (200) with a lightning protection layer (100) according to any one of claims 1 to 8;
wherein the lightning protection layer (100) extends at least along a part of an outer surface (205) of the aircraft.

10. The aircraft (200) according to claim 9,
wherein the lightning protection layer (100) is disposed such that the first stratum is disposed between the second stratum (120) and an inner space of the ai rcraft.

11. The aircraft (200) according to any one of claims 9 or 10,
wherein the lightning protection layer (200) extends along the entire outer surface of the aircraft.

## Revendications

1. Couche de protection contre la foudre (100) pour aéronef (200), comportant :
une première couche (110) ;
une deuxième couche (120), qui est couplée à la première couche (110) le long d'une surface de liaison (112) :
une troisième couche (130), qui est disposée de telle manière que la première couche (110) est disposée entre la deuxième couche (120) et la troisième couche (130) ;
dans laquelle la première couche (110) comporte une feuille métallique (116) ;
dans laquelle la deuxième couche (120) comporte au moins une couche de graphène plane bidimensionnelle ;
dans laquelle la troisième couche (130) comporte au moins une couche de graphène plane bidimensionnelle.

2. Couche de protection contre la foudre (100) selon la revendication 1,
dans laquelle la feuille métallique (116) est une feuille de cuivre expansée.

3. Couche de protection contre la foudre (100) selon la revendication 1 ou 2,
dans laquelle la deuxième couche (120) comporte plus de dix couches de graphène.

4. Couche de protection contre la foudre (100) selon l'une des revendications précédentes,
dans laquelle la troisième couche (130) comporte plus de dix couches de graphène.

5. Couche de protection contre la foudre (100) selon l'une des revendications précédentes,
comportant en outre une quatrième couche (140), qui est disposée de telle manière que la deuxième couche (120) est disposée entre la première couche (110) et la quatrième couche (140) ;
dans laquelle la quatrième couche (140) est pourvue d'éléments électriquement conducteurs.

6. Couche de protection contre la foudre (100) selon la revendication 5,
dans laquelle les éléments électriquement conducteurs de la quatrième couche (140) sont des nanotubes de carbone.

7. Couche de protection contre la foudre (100) selon la revendication 5 ou 6,
dans laquelle la quatrième couche (140) est une couche de peinture, qui est pourvue des éléments électriquement conducteurs (142).

8. Couche de protection contre la foudre (100) selon l'une des revendications 5 à 7,
dans laquelle la quatrième couche (140) est pourvue d'éléments électriquement conducteurs (142) de telle manière que la limite de percolation de la quatrième couche n'est pas atteinte.

9. Aéronef (200) comprenant une couche de protection contre la foudre (100) selon l'une des revendications 1 à 8 ;
dans lequel la couche de protection contre la foudre (100) s'étend au moins le long d'une partie d'une surface extérieure (205) de l'aéronef.

10. Aéronef (200) selon la revendication 9,
dans lequel la couche de protection contre la foudre (100) est disposée de telle manière que la première couche est disposée entre la deuxième couche (120) et un espace intérieur de l'aéronef.

11. Aéronef (200) selon l'une des revendications 9 ou 10,
dans lequel la couche de protection contre la foudre (200) s'étend le long de toute la surface extérieure de l'aéronef.
